# EUROPEAN PATENT APPLICATION

(11) **EP 1 211 653 A1**
(43) Date of publication of application: **05.06.2002**
(21) Application number: 00403368.4
(22) Date of filing: 01.12.2000
(51) Int. Cl.: G07F 7/10

(54) **Bill payment system using telephone networks**

(71) Applicant: Atlinks, 92648 Boulogne Cedex (FR)
(72) Inventor: Kelkar, Kishor, Thornleigh, NSW 2120 (AU)
(74) Representative: Grynwald, Albert

(57) **Abstract**

The invention concerns a bill payment system using the telephone network.

This bill payment system uses at least one telephone terminal (16,18) and one server (22) in such a way that the telephone terminal (16,18) is used as a payment terminal.

This telephone terminal (16,18) comprises memory means for storing data related to at least one bank or credit card account (24) to be debited and for storing data related to a bill. It also comprises means for receiving bill data from the server (22) and means for indicating that bill data has been received from at least one server (22). Finally, it also comprises means to authorise the payment of the bill.

## Description

### Field of the invention :

The invention relates generally to the field of bill payment methods, and more specifically to payment methods setting financial transactions through telephone networks.

### Background of the invention :

Known bill payment processes or methods are characterised in that, when a purchaser buys from a seller, the purchaser authorises the seller to withdraw the amount of money corresponding to the purchaser's bill from a financial institution where the purchaser has a bank account or a credit card account.

Thus, when buying, purchasers need at least to identify themselves, specify how they intend to pay and provide an authorisation so that sellers can recover bill amounts from purchasers' bank account or credit card account.

For instance, purchasers use checks and/or credit cards which identify them, specify a method of payment and provide an authorisation to debit the purchaser's bank or credit card account for a specified amount of money.

Purchases can be done directly at the premises of the seller or from a remote location, for example, by post, by phone or via the Internet.

### Drawbacks of prior art:

A purchaser has a plurality of bill payment possibilities and, very often, tends to use different ones in different situations. For instance, credit card payments are generally used when buying from the Internet whereas cheque payments are more commonly used when buying from a catalogue.

Disappointingly, each bill payment process requires its own specific contribution from the purchaser. For instance, a payment process may require that the purchaser gives bank account details and private phone numbers whereas another process may require personal identification details, bill amounts, due dates of payment and credit card numbers.

As a consequence, a purchaser has to deal, at each transaction, with different requirements based on each different process used, increasing thereby the risk to miss a payment deadline or to make a mistake when supplying information.

Also, purchasers can be confused when required to give a phone number to set payments since more and more people tend to have a plurality of phone numbers, for instance for a country house or for a handy (mobile) telephone.

In addition, the risk of making a mistake when completing a payment through any process is increased by the fact that each payment process is independent from the previous one. For instance, a purchaser has to copy each time credit card details in order to buy on the Internet.

For these reasons payment processes tend to increase the amount of mistakes or wrongdoings done by a purchaser when paying bills as well as the possibility to forget to pay a bill.

Moreover, sellers face similar troubles since they tend to propose a plurality of payment methods so that a purchaser can choose at least one way to pay.

Also, some problems do arise specifically to some payment methods. For instance, Internet payments do require purchasers to be equipped with computers linked to the Internet. Similarly, voice response payment systems are rather expensive for small and medium companies. Moreover an immediate debit from the account of the purchaser is not very practical for these purchasers who are accustomed to have their account debited at a later date through the use of credit cards.

### Disclosure of the invention:

The present invention overcomes at least some of the above mentioned drawbacks. It is based on the recognition that most of the people are equipped with telephone terminals, either residential or mobile, and that such terminals may be used as universal payment terminals.

Therefore, the invention relates to a telephone terminal comprising:
memory means for storing data relating to at least one bank account or credit card account to be debited,
means for receiving bill data from a server,
memory means for storing data related to a bill,
means for signalling, for instance displaying, bill data received from at least one server, and
authorisation means for transmitting to the server an authorisation of payment under the control of the user of the telephone terminal.

With such a telephone terminal, payments are very simple operations for the purchaser and it is no more necessary for the user to bother with paper bills, although these may still be used, for instance for comparing the displayed bill data with data on a paper bill.

Also, users have only to enter once bank account or credit card details such as bank account number or credit card number and expiry date.

The terminal has preferably means for comparing the account numbers provided by the server with bill data to the corresponding data which are stored in the memory means of said telephone terminal.

Preferably the telephone terminal comprises means for delaying the payment, via the authorisation signal sent to the server, until a due date. This due date must be provided by the server.

In an embodiment, the telephone terminal has means for receiving, from the server, a signal representing the result of the transaction, i.e. whether this transaction was successful or not and, preferably, means for storing the result of this transaction. In this embodiment, the telephone terminal may comprise means to resend the payment authorisation to the server in case of failure of the transaction.

This operation of sending repeatedly payment authorisations may be repeated for a given number of times specified by the user. If after repeated failures the payment is abandoned, means are provided for displaying a signal representing the occurrence of such a failed transaction in the telephone terminal.

In an embodiment, the telephone terminal uses by default account details programmed by the user. However the terminal may comprise means to change these data in order that, while authorising the payment, user may change these data - number and expiry date - for other valid account data if user wishes to use another account. Also, means may be provided in order that the date of payment could be altered from its original value to suit user needs.

In an embodiment, the terminal comprises means for sending automatic payment authorisations for bills received during a selected period of time. These means are useful when the purchaser is going to be absent during a given period of time.

The invention concerns also a server, more particularly for cooperating with the above mentioned telephone terminal.

This server comprises :
means for receiving billing information,
means for sending the billing information to a corresponding telephone terminal, and
means for receiving bill payment messages from telephone terminals.

Preferably this server has means for acknowledging either a payment authorisation received from a telephone terminal or a failure of such authorisation.

The server comprises also, preferably, means for transferring to a seller's terminal, by telephone lines, the billing amounts recovered from telephone terminals.

The invention relates also to a debiting terminal to be used by a seller.

This billing terminal comprises means for sending, via telephone lines, bill information to a server.

In an embodiment, the debiting terminal comprises means for sending automatically a bill by e-mail to the purchaser , or for producing automatically a paper copy of each bill to be sent by post to the purchaser.

The invention concerns also message protocols between the server and the telephone terminal.

A billing message protocol comprises an account number, an invoice number, billing amount, a due date of payment and time duration in cases of bills for services such as water, gas, electricity, telephone, etc.

A bill payment message protocol sent from the telephone terminal to the server contains also an account number, an invoice number, billing amount and account or credit card details stored in the memory of the telephone terminal.

### Brief description of the drawing

A preferred embodiment of the invention is explained in greater details hereunder with reference to the accompanying drawing wherein the figure is a general block diagram of the presently preferred embodiment payment process and devices according to the invention.

### Detailed description of a preferred embodiment :

A preferred embodiment of the invention is explained in greater details hereunder with reference to the accompanying figure which is a diagram of a bill payment process according to the invention.

In this description, reference to an A-pay phone means a telephone terminal comprising means to perform the payment process according to the description hereunder.

Similarly, an A-pay server and an A-pay seller terminal respectively mean a server and a respectively a seller terminal comprising means to proceed with the A-pay process as described hereunder.

In this diagram, a seller 10 and two purchasers 12 and 14 thereof are represented. Both purchasers 12 and 14 dispose of A-pay phone terminals - respectively A-pay phone 16 and A-pay phone 18. The seller 10 has a debiting terminal 11 which can access an A-pay server 22 through an interface 20 for sending messages to this server.

When purchasers 12 and 14 buy from the seller 10, bills summarising each transaction are set. More precisely, these bills indicate purchaser and seller identifications, A-pay purchasers' phone number and A-pay seller server number, bill amounts, due date of payment, invoice number, time frame for the payment and account number used for the payment. It may be underlined that each bill is made individually for each customer.

Thereafter, purchasers receive a statement summarising this information via electronic or paper mail depending on whether each purchaser disposes or not of electronic-mail facilities.

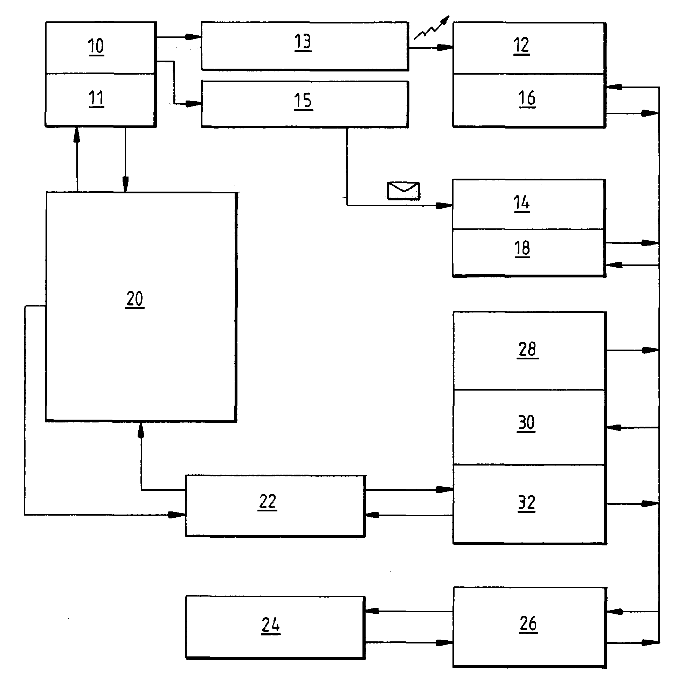

As represented in figure 1, purchaser 12 receives a bill statement 13 via electronic-mail whereas purchaser 14 receives a bill statement 15 by the post.

Once purchaser 12 receives the statement 13, he/she programs the A-pay phone 16 with some of the information contained thereon, i.e. seller identification, A-pay server number, bank account or credit card details used for the payment of this bill.

Similarly, when purchaser 14 receives the statement 15, he/she programs the A-pay phone 18 with data thereof.

In parallel, seller 10 sends through the A-pay seller terminal 11 brief statements of the bills to the A-pay server 22 according to a Billing message protocol.

This Billing message protocol ensures that each brief statement comprises information set in the statements 13 and 15 which is relevant for the payment of the corresponding bill such as purchaser's account number, invoice number, bill amount, due date of payment and time frame for which the bill is made.

It may be highlighted at this point that communications between A-pay terminals (telephones, servers, etc) through the telephone network rely on known technologies which allow identification and transmission of information. For instance, the use of Dual Tone Modulating Frequency (DTMF) and Customer Alerting Signal (CAS) allows the settlement of any communication between A-pay terminals following a standardised sequence. More precisely, this sequence is as follows :
First, an A-pay caller terminal sends a CAS signal to an A-pay called terminal.

Then, the A-pay called terminal sends back a DTMF signal showing its readiness to receive information from the A-pay caller terminal.

Finally, the A-pay caller terminal can send the desired information by Frequency Shift Keying (FSK) to the A-pay called terminal.

Moreover, at the end of the communication, the A-pay called terminal can acknowledge good reception of a message by sending another DTMF tone at the end of the communication.

Following this sequence, once server 22 receives these brief statements of the bills from the seller A-pay terminal 11, server 22 gets connected automatically to the telephone network and calls A-pay phones 16 and 18. This can happen very much prior to due date of payment so that purchasers have enough time to review their bills and authorise their payments.

A-pay phones are programmed with a set of server's phone numbers corresponding to the servers from which purchasers accept to set payments. Thus, when A-pay phones detect the call from the A-pay server 22, A-pay phones admit the call and seize the line.

This communication can be set following the sequence here above described with CAS and DTMF signals.

Considering only the case of purchaser 12 - the process described hereunder is, from this step, identical for purchaser 14 - during the communication of A-pay phone 16 with server 22, the latter indicates to the A-pay phone 16 details of the bill.

The details of the bill, which may be displayed on a screen of terminal 16, comprise data provided by the seller 10 to server 22, and more precisely invoice number, billing amount, due date of payment, purchaser 12 account number used for the settlement of this bill, date of issue of the bill and seller identification.

Then the A-pay phone compares the data provided by server 20 with the data programmed by the purchaser 12. If this comparison reveals differences between the two data, A-pay phone warns user 12 about this problem, for instance by displaying both discordant data on a screen.

Moreover, in all cases, it warns purchaser 12 that a payment authorization is required for the identified bill.

Thus, purchaser 12 can check the accuracy of the transaction before authorising it, for instance by dialling a given number which is a customer service number for a given service provider.

In another embodiment, it is foreseen that the A-pay server 22 calls the A-payphone 16 only at fixed time, for instance every two weeks.

In all cases, phone terminal 16 stores this message in a non-volatile memory, while warning purchaser 12 of this message reception. In this way purchaser 12 can validate the payment of the bill at any time between the reception of the message and the due date of payment. Thus at the date of payment, the A-pay phone terminal 16 can automatically check and authorise a payment.

In case purchaser 12 is not available at the moment of the call, A-pay phone can authorise automatically the payment if purchaser 12 accepted this possibility when configuring the phone. In this case, A-pay phone allows the transaction if the information provided by the server 20 matches exactly the information programmed by purchaser 12.

In this embodiment, purchaser 12 can check the bank account or credit card account used for the payments in order to know whether payments can proceed successfully, i.e. if the bank account or credit card account 24 contains enough money. For that purpose, purchaser 12 can send a query for a balance 26 through the phone network.

In case the account 24 does not contain enough money to pay the bill, purchaser 12 can select another account if another one is programmed in the phone during this operation.

Once the transaction is authorised by the A-pay phone 16 - through an authorisation 30 - server 22 proceeds to pay the bill from the specified bank account or credit card account.

This payment is made on the due date of payment independently of the date when the user 12 validates the payment.

For that purpose, the A-pay telephone calls automatically the A-pay server, following the already mentioned CAS and DTMF signals sequence.

In case the communication cannot be set, the A-pay phone calls back the server as many times as programmed by purchaser 12.

Once the communication is set, the A-pay phone detects the signal indicating the possibility to proceed to the payment and prepares a bill payment statement indicating relevant information such as seller identification, user account used for the payment, invoice number of the bill, bill amount to be paid.

When receiving this bill payment statement, A-pay server 22 checks the accuracy of the provided information versus the information provided by the seller 10.

Finally, the server 22 contacts the account 24 authority, for instance a bank, and requires the payment of the bill.

After checking the availability of the due amount of money in the specified account, the bank refuses or accepts to proceed to the payment of the bill. If the payment is authorised, the bank sends a confirmation of the payment to the server 22 which generates a payment receipt number.

Otherwise, server 22 generates a failure statement indicating the unavailability of the due amount of money.

Then, server 22 calls the A-pay phone 16 and transmits a transaction summary to the A-pay phone 16.

In case the transaction was successful, it indicates more particularly the amount paid, the receipt number, the date of payment and the account used.

In case the payment failed, it indicates the reasons of the failure, such as refusal of authorisation from the account 24, due to insufficient bank account reserve or wrong details indicated.

In both cases - failed or successful transactions - the server 22 sends a message to the seller 10. This message provides the paid amount to the server, in case of successful transaction, or, otherwise, the reasons of the failure.

At the same time, the A-pay phone indicates to the user 12 the outcome of the payment process. Thereby, the user knows exactly the bill situation and, in case of failure, may remedy to the reason thereof.

In this embodiment, A-pay phones are equipped in such a way that purchasers can control the payment of their bills, i.e. to check all the bills to be paid, their due date of payment, the accounts used for each payment, etc. In other words, the telephone terminal provides all necessary information about bills to be paid.

Moreover, purchaser can use different phone numbers since a main A-pay phone can be programmed to transfer an A-pay call from the A-pay server to another A-pay phone validated by the purchaser. For instance, when leaving to country, a purchaser can activate a direct transfer from the city A-pay phone to the country A-pay phone.

It should be underlined that the whole process is done while a server number has been identified. Thus, in case of a plurality of servers linked to the network, it is possible to keep a payment process confidential to a single server.

## Claims

1. A telephone terminal (16,18) comprising:
memory means for storing data relating to at least one bank or credit card account (24) to be debited and for storing data related to a bill,
means for receiving bill data from a server (22),
means for indicating, for instance by displaying, that bill data has been received from at least one server (22), and
authorisation means for transmitting to the server (22) an authorisation of payment of the bill under the control of the user of the telephone terminal (16,18).

2. A telephone terminal (16,18) according to claim 1 comprising means for comparing the data stored in said memory means to the corresponding bill data received from the server (22).

3. A telephone terminal (16,18) according to claim 1 or 2 comprising means for delaying the payment, via the authorization signal sent to the server (22), until a due date.

4. A telephone terminal (16,18) according to any of the previous claims comprising means for receiving a signal from the server (22) representing the result of the transaction and means for storing this result.

5. A telephone terminal (16,18) according to claim 4 comprising means to resend the payment authorization to the server (22) in case of failure of the transaction.

6. A telephone terminal (16,18) according to any of the previous claims comprising means for sending automatically authorization payment for bills received during a selected period of time.

7. A telephone terminal (16,18) according to any of the previous claims comprising means for selecting, under the control of the user, an account to be debited for each bill among a plurality of bank or credit accounts.

8. A server (22) comprising:
means for receiving billing information,
means for sending the billing information to a corresponding telephone terminal (16,18), and
means for receiving bill payment messages from telephone terminals (16,18).

9. A server (22) according to claim 8, comprising means for acknowledging either a payment authorization received from a telephone terminal (16,18) or a failure of such authorization.

10. A server (22) according to claim 8 or 9, comprising means for transferring, by telephone lines, to a seller's terminal, the billing amounts recovered from telephone terminals (16,18).
